**Europäisches Patentamt**

**European Patent Office**

**Office européen des brevets**

(19)

(11) Veröffentlichungsnummer: **0 184 988**
**B1**

(12) # EUROPÄISCHE PATENTSCHRIFT

(45) Veröffentlichungstag der Patentschrift:
**31.08.88**

(51) Int. Cl.⁴: **F 16 B  13/06**

(21) Anmeldenummer: **85810543.0**

(22) Anmeldetag: **15.11.85**

(54) **Spreizdübel mit Innengewinde.**

(30) Priorität: **10.12.84  DE 3444987**

(43) Veröffentlichungstag der Anmeldung:
**18.06.86 Patentblatt 86/25**

(45) Bekanntmachung des Hinweises auf die Patenterteilung:
**31.08.88 Patentblatt 88/35**

(84) Benannte Vertragsstaaten:
**AT CH DE FR GB LI NL**

(56) Entgegenhaltungen:
**CH-A-604 027**
**CH-A-615 734**
**CH-A-635 172**
**DE-A-2 749 054**
**DE-A-3 238 852**
**US-A-3 385 155**

(73) Patentinhaber: **HILTI Aktiengesellschaft, FL- 9494 Schaan (LI)**

(72) Erfinder: **Herb, Armin, Lärchenstrasse 9, D-8123 Peissenberg (DE)**

(74) Vertreter: **Wildi, Roland, Hilti Aktiengesellschaft Patentabteilung, FL- 9494 Schaan (LI)**

EP 0 184 988 B1

LIBER, STOCKHOLM 1988

## Beschreibung

Die Erfindung betrifft einen Spreizdübel mit radial aufweitbarer Spreizschale, die wenigstens einen Längsschlitz mit entgegen der Setzrichtung keilförmig gegeneinander verlaufenden Längsrändern aufweist, entlang denen ein mit Innengewinde versehener Spreizkörper mittels eines Gewindebolzens axial verschiebbar ist.

Insbesondere aus Sicherheitsgründen wird heute im Niedriglastbereich anstelle von Kunststoffdübeln die Anwendung von Metalldübeln gefordert. Bei diesen Anwendungen ist nur ein relativ niedriges Lastniveau notwendig. Aufgrund der Massenanwendungen herrscht jedoch ein hoher Kostendruck. Aus diesem Grunde muß nach außerordentlich wirtschaftlich herstellbaren Metalldübeln gesucht werden.

Für die Anwendung innerhalb des genannten Lastniveaus sind aus der US-PS-3 385 155 Metalldübel bekannt, die aus einer Spreizschale und einem gegenüber dieser relativ verschiebbaren Spreizkörper bestehen. Durch die Relativverschiebung erfährt die Spreizschale eine radiale Aufweitung.

Diese bekannten Metalldübel sind in ihrem Aufbau derart kompliziert, daß sie sich nur spanabhebend herstellen lassen. Damit entstehen hohe Herstellungskosten, so daß eine Verwendung solcher Metalldübel im interessierenden Anwendungsbereich aus wirtschaftlichen Gründen ausscheidet.

Der Erfindung liegt die Aufgabe zugrunde, einen Metallspreizdübel zu schaffen, der sich wirtschaftlich herstellen läßt, in seiner Anwendung einfach ist und zu guten Verankerungswerten führt.

Gemäß Erfindung wird die Aufgabe dadurch gelöst, daß der Spreizkörper den Gewindebolzen schalenförmig umgibt und den Längsrändern der Spreizschale entsprechend keilförmig verlaufende Längskanten aufweist.

Sowohl Spreizschale als auch Spreizkörper des erfindungsgemäßen Dübels können in einfacher Weise beispielsweise durch ein Stanz- und Rollverfahren wirtschaftlich hergestellt werden. Eine spanabhebende Bearbeitung ist dank des einfachen Aufbaues des Dübels nicht erforderlich. Auch das Innengewinde des Spreizkörpers kann durch einen Roll- bzw. Prägevorgang in einfacher Weise hergestellt werden.

Die guten Verankerungswerte des erfindungsgemäßen Spreizdübels sind insbesondere eine Folge der gleichmäßigen radialen Aufweitung der Spreizschale, die dank der großflächigen Auflage des Spreizkörpers an den Längsrändern der Spreizschale zustande kommt. Sowohl zwischen Spreizkörper und Spreizschale als auch zwischen Spreizschale und Aufnahmematerial treten daher keine zu allfälligen Beschädigungen führende Überbeanspruchungen der Materialien auf.

Um zu verhindern, daß die Spreizkörper beim Spreizvorgang außer Eingriff mit dem Ankerbolzen gelangen, ist zweckmäßigerweise der Spreizkörper im Bereich der Längsränder die Spreizschale auf deren Innenseite teilweise überlappend ausgebildet. Durch diese Überlappung von Spreizschale und Spreizkörper wird einerseits die Spreizschale radial gegen die Bohrlochwandung gedrückt. Gleichzeitig preßt aber die Spreizschale den Spreizkörper gegen das Gewinde des Ankerbolzens. Je größer die Vorspannung bzw. die axiale Belastung des Dübels ist, desto stärker werden die Spreizkörper gegen das Gewinde des Ankerbolzens gepreßt. Beim Spreizen des Dübels erfolgt dabei ein überproportionales Ansteigen des auf zubringenden Drehmomentes, so daß ein Zerstören des Dübels bzw. des Aufnahmematerials durch Überspreizen weitgehend verhindert wird.

Zur Erzielung einer möglichst gleichmäßigen Verteilung des Spreizdruckes über den Umfang besteht der Spreizkörper aus vorzugsweise wenigstens zwei den Gewindebolzen schalenförmig umgebenden Teilen. Durch die Mehrteiligkeit des Spreizkörpers erstrecken sich die einzelnen Teile des Spreizkörpers nur über einen Teil des Umfanges.

Im Hinblick auf die Lagerung und Handhabung des Dübels ist zweckmäßigerweise der Spreizkörper mit der Spreizhülse über eine Sollbrucheinrichtung verbunden. Eine solche Sollbrucheinrichtung kann beispielsweise als dünner, zerstörbarer Steg ausgebildet sein. Daneben ist es auch möglich, den Spreizkörper durch Kleben, Löten oder Schweißen mit der Spreizschale zu verbinden.

Das Innengewinde des Spreizkörpers kann sich über dessen gesamten Umfangsbereich erstrecken. Bei Dübeln für geringere Belastungen ist dies aus Festigkeitsgründen meist nicht notwendig. Für eine einfache Herstellung ist es somit vorteilhaft, den Spreizkörper mit in axialer Richtung verlaufenden, der Bildung des Innengewindes dienenden Einprägungen zu versehen. Solche Einprägungen müßen vor der Herstellung des Innengewindes am Spreizkörper angebracht werden und sind vorzugsweise etwa im mittleren Bereich des Spreizkörpers angeordnet.

Falls sich das Innengewinde des Spreizkörpers nicht über dessen gesamten Umfang erstreckt, ist es zweckmäßig, die Längskanten des Spreizkörpers gegen die Dübellängsachse nach innen zu biegen. Die Längskanten des Spreizkörpers sind jene Bereiche, welche beim Spreizvorgang durch die Spreizschale besonders stark gegen den Gewindebolzen gepreßt werden. Somit wird verhindert, daß sich der mit Gewinde versehene Teil des Spreizkörpers vom Gewindebolzen abheben kann.

Die Erfindung soll nun nachstehend anhand der sie beispielsweise wiedergebenden Zeichnungen näher erläutert werden. Es zeigen:

Fig. 1   einen erfindungsgemäßen Spreizdübel, in Ansicht;

Fig. 2    einen Querschnitt durch den Spreizdübel gemäß Fig. 1, entlang der Linie II - II;

Fig. 3    eine Abwicklung der Spreizschale des Dübels gemäß Fig. 1 und 2;

Fig. 4    einen Teil des Dübels gemäß Fig. 1 und 2, in perspektivischer Ansicht;

Fig. 5    einen Spreizdübel gemäß den Fig. 1 bis 4, in verankertem Zustand;

Fig. 6    eine weitere Ausführung eines erfindungsgemäßen Spreizdübels;

Fig. 7    einen Querschnitt durch den Spreizdübel gemäß Fig. 6;

Fig. 8    eine Abwicklung des Spreizdübels gemäß Fig. 6;

Fig. 9    einen Spreizdübel gemäß den Fig. 6 bis 8, in verankertem Zustand.

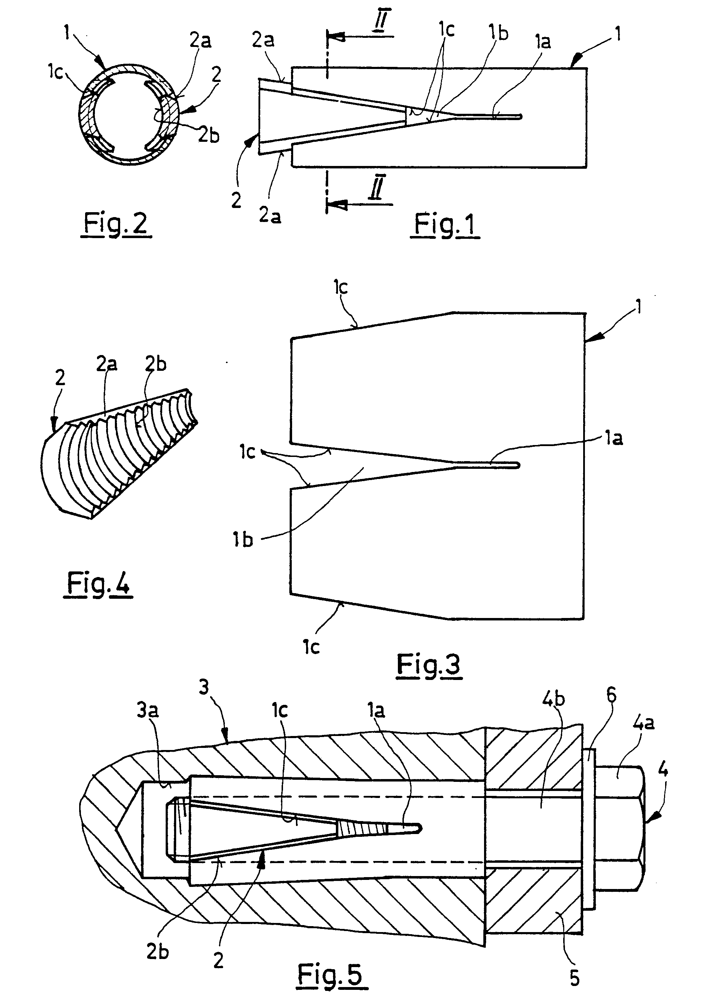

Der aus den Fig. 1 bis 5 ersichtliche Spreizdübel besteht im wesentlichen aus einer insgesamt mit 1 bezeichneten Spreizschale und einem insgesamt mit 2 bezeichneten zweiteiligen Spreizkörper. Die Spreizschale 1 ist hülsenförmig ausgebildet und weist an ihrem Umfang einen sich über einen Teil ihrer Länge erstreckenden Längsschlitz 1a sowie zwei sich zum vorderen Ende erweiternde Ausschnitte 1b auf. Die Längsränder 1c der Ausschnitte 1b sind gerade und verlaufen keilförmig gegeneinander. Beide Teile des Spreizkörpers 2 sind schalenförmig ausgebildet und weisen den Längsrändern 1c entsprechende Längskanten 2a auf. Auf ihrer Innenseite sind die Teile des Spreizkörpers 2 mit Innengewinde 2b versehen. Wie insbesondere der in Fig. 2 dargestellte Querschnitt zeigt, überlappen die Teile des Spreizkörpers 2 die Spreizschale 1 auf deren Innenseite teilweise. Beim Spreizvorgang werden somit die Teile des Spreizkörpers 2 durch die Längsränder 1c der Spreizschale 1 radial nach innen gegen den sie durchsetzenden Gewindebolzen gepreßt.

In Fig. 5 ist der Dübel in ein Bohrloch 3a eines insgesamt mit 3 bezeichneten Aufnahmematerials eingesetzt. Ein insgesamt mit 4 bezeichneter Gewindebolzen ist zur Befestigung eines Bauteils 5 in den Dübel eingeschraubt. Der Gewindebolzen 4 weist einen Kopf 4a sowie einen Schaft 4b auf. Zwischen dem Kopf 4a und dem zu befestigenden Bauteil 5 ist eine Unterlegscheibe 6 angeordnet. Beim Aufbringen eines Drehmomentes am Kopf 4a wird der Spreizkörper 2 in die Ausschnitte 1b der Spreizschale 1 eingezogen und bewirkt dabei ein radiales Aufweiten der Spreizschale 1 über deren gesamten Umfang. Da die Spreizschale 1 den Spreizkörper 2 im Bereich der Längskanten 2a teilweise überlappt, bleibt der Spreizkörper 2 im Gewindeeingriff mit dem Schaft 4b des Gewindebolzens 4.

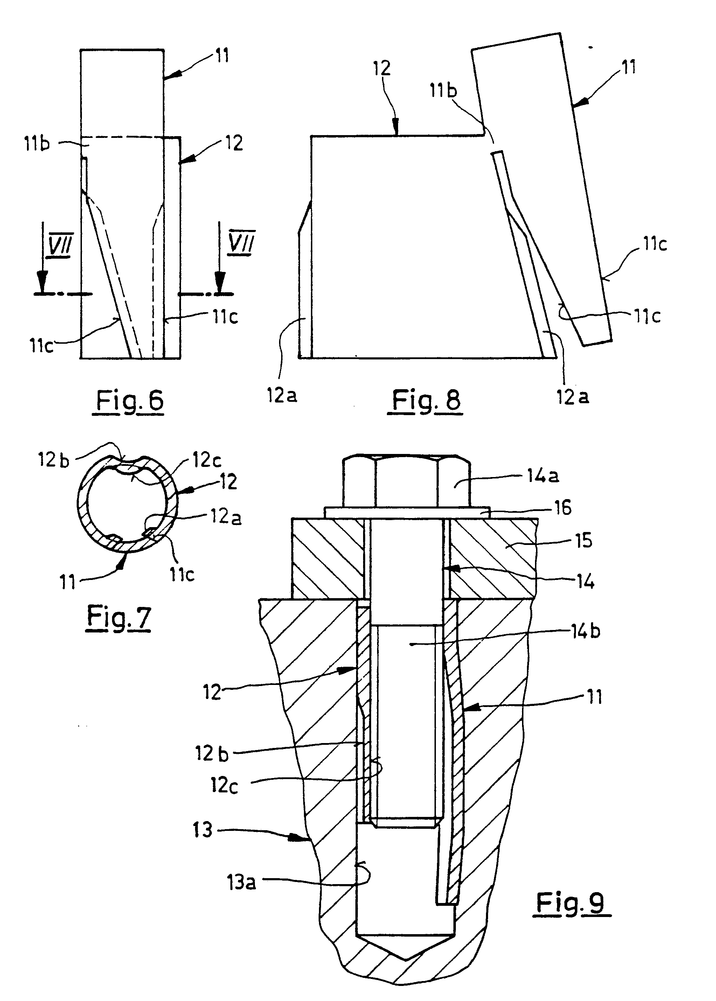

Die aus den Fig. 6 bis 9 ersichtliche Ausführung des erfindungsgemäßen Dübels besteht aus einer insgesamt mit 11 bezeichneten Spreizschale und einem insgesamt mit 12 bezeichneten Spreizkörper. Die Spreizschale 11 ist über einen Sollbruchsteg 11b mit dem Spreizkörper 12 verbunden und weist keilförmig zueinander verlaufende Längsränder 11c auf. Der Spreizkörper 12 ist mit angeschrägten Längskanten 12a versehen. Wie aus Fig. 7 ersichtlich, sind die Längskanten 12a des im wesentlichen hülsenförmigen Spreizkörpers nach innen gebogen. Außerdem weist der Spreizkörper 12 eine in seiner Längsrichtung verlaufende Einprägung 12b auf. Die Einprägung 12b sowie die nach innen gebogenen Längskanten 12a des Spreizkörpers 12 sind mit einem Innengewinde 12c versehen. Beim Spreizvorgang des Dübels werden die Längskanten 12a durch die Spreizschale 11 radial nach innen gegen einen Gewindebolzen gepreßt.

Bei dem in Fig. 9 dargestellten verankerten Zustand des Dübels ist dieser in ein Bohrloch 13a eines insgesamt mit 13 bezeichneten Aufnahmematerials eingesetzt. Ein Gewindebolzen 14 ist durch ein zu befestigendes Bauteil 15 hindurch in den Dübel eingeschraubt. Der Gewindebolzen 14 weist ebenfalls einen Kopf 14a sowie einen Schaft 14b auf. Zwischen dem Kopf 14a des Gewindebolzens 14 und dem Bauteil 15 ist eine Unterlegscheibe 16 angeordnet. Beim Eindrehen des Gewindebolzens 14 wird zunächst der Sollbruchsteg 11b zerstört und dann der mit dem Gewindebolzen 14 in Gewindeeingriff stehende Spreizkörper unter radialer Aufweitung durch die Spreizschale 11 in Richtung des zu befestigenden Bauteils 15 gezogen. Dieses Bauteil 15 bildet im vorliegenden Beispiel einen axialen Anschlag für den Spreizkörper 12 und begrenzt somit den Spreizweg.

**Patentansprüche**

1. Spreizdübel mit radial aufweitbarer Spreizschale (1, 11), die wenigstens einen Längsschlitz mit entgegen der Setzrichtung keilförmig gegeneinander verlaufenden Längsrändern (1c, 11c) aufweist, entlang denen ein mit Innengewinde versehener Spreizkörper mittels eines Gewindebolzens axial verschiebbar ist, dadurch gekennzeichnet, daß der Spreizkörper (2, 12) den Gewindebolzen (4, 14) schalenförmig umgibt und den Längsrändern (1c, 11c) der Spreizschale (1, 11) entsprechend keilförmig verlaufende Längskanten (2a, 12a) aufweist.

2. Spreizdübel nach Anspruch 1, dadurch gekennzeichnet, daß der Spreizkörper (2, 12) im Bereich der Längsränder (1c, 11c) die Spreizschale (1, 11) auf deren Innenseite teilweise überlappend ausgebildet ist.

3. Spreizdübel nach Anspruch 1 oder 2, dadurch gekennzeichnet, daß der Spreizkörper (2) aus wenigstens zwei den Gewindebolzen schalenförmig umgebenden Teilen besteht.

4. Spreizdübel nach einem der Ansprüche 1 bis 3, dadurch gekennzeichnet, daß der Spreizkörper (12) mit der Spreizschale (11) über eine Sollbrucheinrichtung (11b) verbunden ist.

5. Spreizdübel nach einem der Ansprüche 1 bis 4, dadurch gekennzeichnet, daß die Längskanten (12a) des Spreizkörpers (12) gegen die Dübellängsachse nach innen gebogen sind.


## Claims

1. An expansible dowel comprising a radially expansible expansion cup (1, 11) which has at least one longitudinal slot having longitudinal edges (1c, 11c) which extend in a wedge-shaped manner towards one another contrary to the setting direction and along which an expansion body provided with a female thread is axially displaceable by means of a threaded bolt, characterised in that the expansion body (2, 12) surrounds the threaded bolt (4, 14) in a cup-shaped manner and has longitudinal edges (2a, 12a) which extend in a wedge-shaped manner in accordance with the longitudinal edges (1c, 11c) of the expansion cup (1, 11).

2. An expansible dowel according to claim 1, characterised in that the expansion body (2, 12) in the region of the longitudinal edges (1c, 11c) is designed partially overlapping the expansion cup (1, 11) on the inside thereof.

3. An expansible dowel according to claim 1 or 2, characterised in that the expansion body (2) consists of at least two parts which surround the threaded bolt in a cup-shaped manner.

4. An expansible dowel according to any one of claims 1 to 3, characterised in that the expansion body (12) is connected to the expansion cup (11) by way of a predetermined breaking mechanism (11b).

5. An expansible dowel according to any one of claims 1 to 4, characterised in that the longitudinal edges (12a) of the expansion body (12) are bent inwardly towards the longitudinal axis of the dowel.


## Revendications

1. Cheville à expansion avec une coquille (1, 11) expansible dans le sens radial qui présente au moins une fente longitudinale avec des bords longitudinaux (1c, 11c) s'étendant l'un par rapport à l'autre en forme de coin, dans le sens opposé à la direction d'enfoncement, et le long desquels un élément d'écartement pourvu d'un filet femelle peut être déplacé axialement au moyen d'un boulon fileté, caractérisée en ce que l'élément d'écartement (2, 12) entoure le boulon fileté (4, 14) à la manière d'une coquille et présente des arêtes longitudinales (2a, 12a) qui s'étendent en coin conformément aux bords longitudinaux (1c, 11c) de la coquille expansible (1, 11).

2. Cheville à expansion selon la revendication 1, caractérisée en ce que l'élément d'écartement (2, 12) recouvre partiellement la coquille expansible (1, 11) dans la région des bords longitudinaux (1c, 11c), à la face intérieure de ladite coquille expansible.

3. Cheville à expansion selon l'une des revendications 1 ou 2, caractérisée en ce que l'élément d'écartement (2) se compose d'au moins deux parties qui entourent le boulon fileté à la manière d'une coquille.

4. Cheville à expansion selon l'une quelconque des revendications 1 à 3, caractérisée en ce que l'élément d'écartement (12) est rattaché à la coquille expansible (11) par l'intermédiaire d'un organe de rupture imposée (11b).

5. Cheville à expansion selon l'une quelconque des revendications 1 à 4, caractérisée en ce que les arêtes longitudinales (12a) de l'élément d'écartement (12) sont courbées vers l'intérieur en direction de l'axe longitudinal de la cheville.

Fig.2

Fig.1

Fig.4

Fig.3

Fig.5

**Fig. 6**

**Fig. 8**

**Fig. 7**

**Fig. 9**